# EUROPEAN PATENT SPECIFICATION

(11) **EP 3 467 440 B1**
(45) Date of publication and mention of the grant of the patent: **15.12.2021**
(21) Application number: 18166484.8
(22) Date of filing: 10.04.2018
(51) Int. Cl.: G01C 21/36

(54) **POSSIBLE ARRIVAL POINT SPECIFYING SYSTEM, METHOD FOR SPECIFYING POSSIBLE ARRIVAL POINT, AND TANGIBLE NON-TRANSITORY COMPUTER-READABLE STORAGE MEDIUM CONTAINING COMPUTER PROGRAM**
SYSTEM ZUR BESTIMMUNG EINES MÖGLICHEN ZIELPUNKTS, VERFAHREN ZUR BESTIMMUNG EINES MÖGLICHEN ZIELPUNKTS UND GREIFBARES, NICHT-TRANSITORISCHES, COMPUTERLESBARES SPEICHERMEDIUM MIT EINEM COMPUTERPROGRAMM
SYSTÈME DE SPÉCIFICATION DE POINTS D'ARRIVÉE POSSIBLES, PROCÉDÉ PERMETTANT DE SPÉCIFIER UN POINT D'ARRIVÉE POSSIBLE ET SUPPORT D'INFORMATIONS LISIBLE PAR ORDINATEUR NON TRANSITOIRE TANGIBLE CONTENANT UN PROGRAMME INFORMATIQUE

(30) Priority: 04.10.2017 JP 2017194047
(43) Date of publication of application: 10.04.2019
(73) Proprietor: Toyota Mapmaster Incorporated, Nagoya-shi, Aichi 453-6113 (JP); Toyota Jidosha Kabushiki Kaisha, Toyota-shi, Aichi 471-8571 (JP)
(72) Inventor: DEGUCHI, Satoru, Nagoya-shi, Aichi 453-6113 (JP); MATSUSHITA, Makoto, Toyota-shi, Aichi 471-8571 (JP)
(74) Representative: TBK

(56) References cited:
- JP-A- 2010 096 890
- JP-A- 2010 230 420

## Description

### [FIELD OF INVENTION]

The present invention relates to a possible arrival point specifying system, a method for specifying a possible arrival point, and a tangible non-transitory computer-readable storage medium containing computer program.

### [BACKGROUND ART]

The conventional navigation system may finish route guidance to a set destination at a location near the destination without giving the route guidance to the destination when guiding a vehicle to the set destination. The guidance end point may be a road closest to the destination, and when the destination is a facility or the like, the guidance end point may be provided in advance as information on the facility. However, the road closest to the destination may not necessarily be close to the entrance of the destination. This may force the driver to drive around unnecessarily to find the entrance of the destination.

JP-A-2010-230420 discloses a parking entrance information generation method as a technique related to the above. The parking entrance information generation method verifies whether a polygon, in which the parking position of a probe vehicle is located, corresponds to a site related to the destination. When the relationship between the polygon and the site is confirmed, the method registers a deviation position, where the probe vehicle deviates from the final link of the guide route, and specifies the parking entrance based on the registered deviation position.

Please refer to JP-A-2014-102141, JP-A-2010-96890 and JP-A-2007-256207 that disclose the conventional techniques related to the present invention.

### [SUMMARY OF THE INVENTION]

### [PROBLEM TO BE SOLVED BY THE INVENTION]

The present inventors have studied keenly to make it possible to provide, as a possible arrival point, a point that is more practical and is closer to the entrance of the destination point. As a result, the present inventors found the following.

The destination point set by the navigation system and points (link deviation points), at which a vehicle deviates from a final link in the travel trajectory to the set destination point, are used as the probe information. The link deviation points that are associated with the same destination point and located adjacent to each other are grouped together. A reference coordinate is set based on the grouped link deviation point group, and the set reference coordinate is specified as a possible arrival point. Because of the above, it is possible to make the possible arrival point more practical.

In addition, the present inventors came up with the following idea. When the destination points are located adjacent to each other, the destination points are highly likely to share the same entrance. Therefore, the destination points serving as the probe information that are located adjacent to each other are grouped. Then, the above reference coordinate is set based on the link deviation points associated with the grouped destination points. Then, the set reference coordinate is specified as the possible arrival point of the target area that is set based on the grouped destination points and/or as the possible arrival point of a facility or an address located within the target area. According to the above, it is possible to use the greater number of link deviation points associated with multiple destination points that share the same entrance or are highly likely to share the same entrance, and thereby it is possible to more practically specify the possible arrival point.

### [MEANS FOR SOLVING THE PROBLEM]

The present invention was made in view of the above problem, and the first aspect of the present invention is defined as follows.

The possible arrival point specifying system defined in the first aspect includes:
a probe information storing unit configured to store therein destination points set by a navigation system in association with link deviation points corresponding to the respective destination points, wherein a link deviation point is a point at which a vehicle deviates from a final link in a travel trajectory to a respective set destination point;
a destination point group generating unit configured to refer to the probe information storing unit and to group the destination points located adjacent to each other to generate a destination point group;
a target area setting unit configured to set a target area based on the generated destination point group;
a target link deviation point specifying unit configured to refer to the probe information storing unit and specify, as target link deviation points, link deviation points associated with the destination points included in the generated destination point group;
a link deviation point group generating unit configured to group the specified target link deviation points located adjacent to each other to generate a link deviation point group;
a reference coordinate setting unit configured to set a reference coordinate for the generated link deviation point group; and
a possible arrival point specifying unit configured to specify the set reference coordinate as a possible arrival point of the target area and/or a possible arrival point of a facility or an address located within the target area.

As above, the possible arrival point specifying system of the first aspect groups the destination points, which are stored in the probe information storing unit and are located adjacent to each other, to generate the destination point group. Then, the system specifies link deviation points, which are associated with the respective destination points included in the generated destination point group, as target link deviation points. Then, the system groups certain points among the specified target link deviation points, which certain points are located adjacent to each other, to generate a link deviation point group. Then, the system specifies the reference coordinate set based on the generated link deviation point group as the possible arrival point of the target area set based on the destination point group. In addition, the system specifies the above set reference coordinate as the possible arrival point of the facility or the address located within the above target area. As above, the adjacent destination points are first grouped, and then the above possible arrival point is specified based on the link deviation points associated with the grouped multiple destination points. As a result, it is possible to use more information than the case, where link deviation points associated with a single destination point are used. Thereby, it is possible to more practically specify the possible arrival point. In addition, the link deviation points that are located adjacent to each other are grouped, and the reference coordinate is set based on thus made link deviation point group. Therefore, it is possible to suppress the data volume for the possible arrival points, and load to CPU is advantageously reduced when a navigation system guides the possible arrival point. Furthermore, the specified possible arrival point is made to serve as the possible arrival point of the target area set based on the grouped destination points or as the possible arrival point of the facility or the address located within the target area. Therefore, this leads to the suppressing of the data volume and to the reducing of load to the CPU advantageously.

The second aspect includes a possible arrival point setting unit configured to set the specified possible arrival point to another facility having a predetermined relationship with the target area. This is because the possible arrival point specified for the target area may be a possible arrival point of the another facility located near the target area.

In the third aspect, the predetermined relationship is based on a distance, a building outline, or a block. When the another facility is located close to the above target area, or when the another facility belongs to or is located within the same building outline or block, within which the target area is located, the another facility likely shares the same entrance with the facility in the target area.

In the possible arrival point specifying system defined in the fourth aspect,
the possible arrival point specifying system defined in any one of the first to third aspects further includes:
an evaluation unit configured to evaluate the generated link deviation point group, wherein:
the possible arrival point specifying unit specifies the possible arrival point based on an evaluation result by the evaluation unit.

As above, the system evaluates the generated link deviation point group and considers the evaluation result when specifying the possible arrival point. As a result, the system is capable of specifying a more suitable possible arrival point and is capable of using the evaluation result as the guideline to provide, as the guidance, the more suitable possible arrival point.

A method for specifying a possible arrival point defined in the fifth aspect includes the steps of:
storing, in a probe information storing unit, destination points set by a navigation system in association with link deviation points corresponding to the respective destination points, wherein a link deviation point is a point at which a vehicle deviates from a final link in a travel trajectory to a respective set destination point;
referring to the probe information storing unit and grouping the destination points located adjacent to each other to generate a destination point group by using a destination point group generating unit;
setting a target area based on the generated destination point group by using a target area setting unit;
referring to the probe information storing unit and specifying a link deviation point associated with the generated destination point included in the destination point group as a target link deviation point by using a target link deviation point specifying unit;
grouping the specified target link deviation points located adjacent to each other to generate a link deviation point group by using a link deviation point group generating unit;
setting a reference coordinate for the generated link deviation point group by using a reference coordinate setting unit; and
specifying the set reference coordinate as a possible arrival point of the target area and/or a possible arrival point of a facility located within the target area or of an address of the target area by using a possible arrival point specifying unit.

According to the possible arrival point specifying method of the fifth aspect defined above, it is possible to achieve advantages equivalent to those of the first aspect.

In the possible arrival point specifying method defined in the sixth aspect,
the possible arrival point specifying method defined in the fifth aspect further includes the step of:
setting the specified possible arrival point to another facility having a predetermined relationship with the target area by using a possible arrival point setting unit.

According to the possible arrival point specifying method of the sixth aspect defined above, it is possible to achieve advantages equivalent to those of the second aspect.

The possible arrival point specifying method defined in the seventh aspect is the possible arrival point specifying method defined in the sixth aspect, wherein:
the predetermined relationship is based on a distance, a building outline, or a block.

According to the possible arrival point specifying method of the seventh aspect defined above, it is possible to achieve advantages equivalent to those of the third aspect.

In the possible arrival point specifying method defined in the eighth aspect,
the possible arrival point specifying method defined in any one of the fifth to seventh aspects further includes the step of:
evaluating the generated link deviation point group using an evaluation unit, wherein:
the specifying of the possible arrival point includes specifying the above possible arrival point based on an evaluation result by the evaluating of the generated link deviation point group.

According to the possible arrival point specifying method of the eighth aspect defined above, it is possible to achieve advantages equivalent to those of the fourth aspect.

A tangible non-transitory computer-readable storage medium defined in the ninth aspect contains a computer program for specifying a possible arrival point, and the computer program is configured to cause a computer to function as:
probe information storing means for storing therein destination points set by a navigation system in association with link deviation points corresponding to the respective destination points, wherein a link deviation point is a point at which a vehicle deviates from a final link in a travel trajectory to a respective set destination point;
destination point group generating means for referring to the probe information storing unit and for grouping the destination points located adjacent to each other to generate a destination point group;
target area setting means for setting a target area based on the generated destination point group;
target link deviation point specifying means for referring to the probe information storing means and for specifying, as target link deviation points, link deviation points associated with the destination points included in the generated destination point group;
link deviation point group generating means for grouping the specified target link deviation points located adjacent to each other to generate a link deviation point group;
reference coordinate setting means for setting a reference coordinate for the generated link deviation point group; and
possible arrival point specifying means for specifying the set reference coordinate as a possible arrival point of the target area and/or a possible arrival point of a facility or an address located within the target area.

According to the tangible non-transitory computer-readable storage medium of the ninth aspect defined above, it is possible to achieve advantages equivalent to those of the first aspect.

The tangible non-transitory computer-readable storage medium defined in the tenth aspect is defined as follows.

In the tangible non-transitory computer-readable storage medium defined in the ninth aspect, the computer program is further configured to cause the computer to function as:
possible arrival point setting means for setting the specified possible arrival point to another facility having a predetermined relationship with the target area.

According to the tangible non-transitory computer-readable storage medium of the tenth aspect defined above, it is possible to achieve advantages equivalent to those of the second aspect.

The tangible non-transitory computer-readable storage medium defined in the eleventh aspect is defined as follows.

In the tangible non-transitory computer-readable storage medium defined in the tenth aspect, the predetermined relationship is based on a distance, a building outline, or a block.

According to the tangible non-transitory computer-readable storage medium of the eleventh aspect defined above, it is possible to achieve advantages equivalent to those of the third aspect.

The tangible non-transitory computer-readable storage medium defined in the twelfth aspect is defined as follows.

In the tangible non-transitory computer-readable storage medium defined in any one of the ninth to eleventh aspects, the computer program is further configured to cause the computer to function as:
evaluation means for evaluating the generated link deviation point group, wherein:
the possible arrival point specifying means specifies the possible arrival point based on an evaluation result by the evaluation means.

According to the tangible non-transitory computer-readable storage medium of the twelfth aspect defined above, it is possible to achieve advantages equivalent to those of the fourth aspect.

### [BRIEF DESCRIPTION OF THE DRAWINGS]

FIG. 1 is a block diagram illustrating a schematic configuration of a possible arrival point specifying system 1 of a first embodiment of the present invention.
FIG. 2A is a schematic diagram illustrating one example of a relationship between a destination point and link deviation points stored in a probe information storing unit 5. FIG. 2B is a schematic diagram for explaining one example of a generation process of the destination points by the destination point group generating unit 7.
FIG. 3A shows examples of a setting process of a target area by a target area setting unit 9, a specifying process of target link deviation points by a target link deviation point specifying unit 11 and a generation process of link deviation point groups by a link deviation point group generating unit 13. FIG. 3B is a schematic diagram for explaining examples of a setting process of a reference coordinate by a reference coordinate setting unit 15 and a specifying process of possible arrival points by a possible arrival point specifying unit 17.
FIG. 4 is a flowchart illustrating one example of a possible arrival point specifying method executed by the possible arrival point specifying system 1 of the first embodiment of the present invention.
FIG. 5 is a block diagram illustrating a schematic configuration of a possible arrival point specifying system 21 of a second embodiment of the present invention.
FIG. 6 is a block diagram illustrating a schematic configuration of a possible arrival point specifying system 31 of a third embodiment of the present invention.
FIG. 7 is a block diagram illustrating a schematic configuration of a possible arrival point specifying system 41 of a fourth embodiment of the present invention.
FIG. 8 is a block diagram illustrating a schematic configuration of a possible arrival point specifying system 51 of a first example embodiment of the present invention.

### [DESCRIPTION OF EMBODIMENTS]

Several embodiments and an example embodiment according to the present disclosure will be described below with reference to the accompanying drawings.

### (First Embodiment)

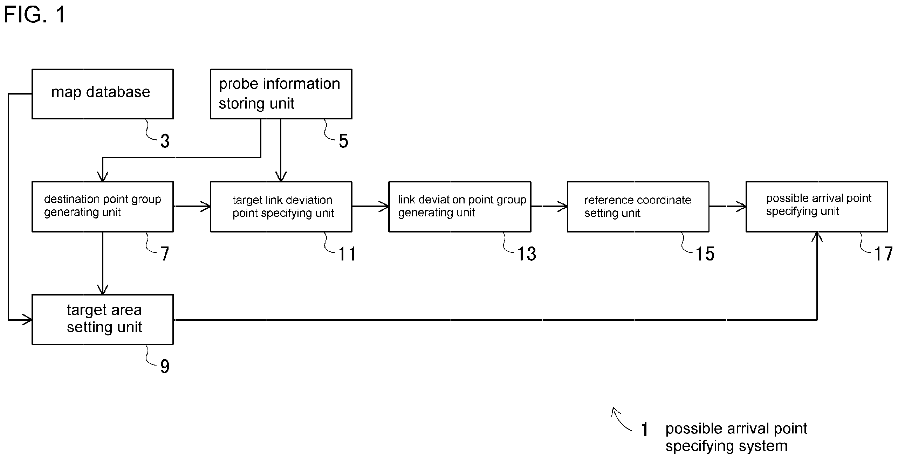

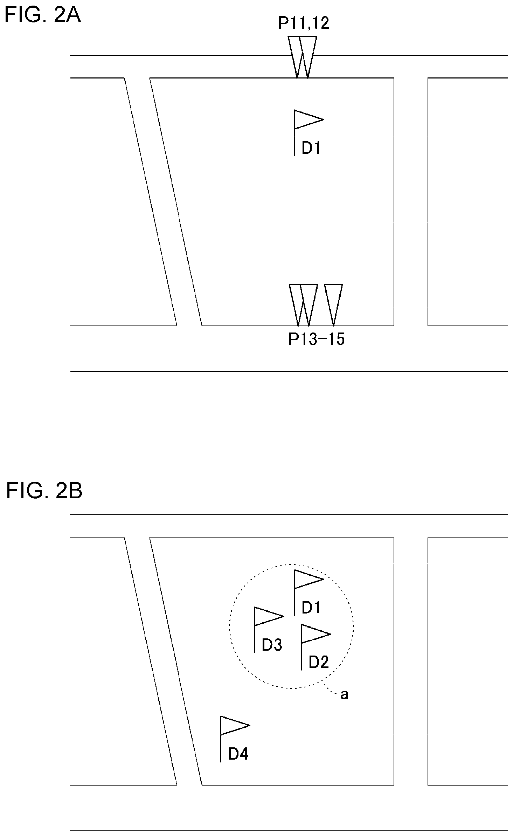

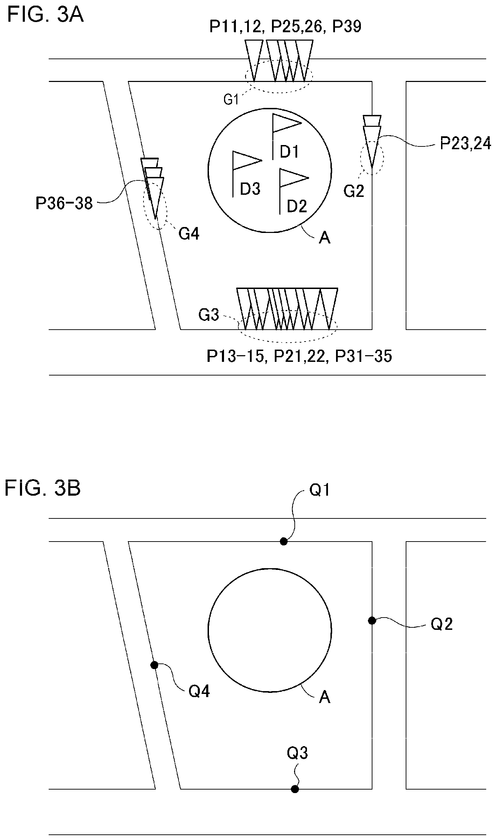

FIG. 1 is a block diagram illustrating a schematic configuration of a possible arrival point specifying system 1 of one embodiment of the present invention. The schematic diagrams illustrated in FIGS. 2 and 3 will be used for explanation below when necessary.

As shown in FIG. 1, the possible arrival point specifying system 1 of the first embodiment includes a map database 3, a probe information storing unit 5, a destination point group generating unit 7, a target area setting unit 9, a target link deviation point specifying unit 11, a link deviation point group generating unit 13, a reference coordinate setting unit 15 and a possible arrival point specifying unit 17.

The map database 3 stores map data therein. The map data includes road-element-related information for defining map information, such as links and nodes, and other information that is drawn in a three-dimensional map, such as structures. For example, in the map data, cities/wards/towns/villages, blocks, and building outlines may be stored in association with coordinates representing the respective area thereof. For example, block polygon data indicating the area is stored for the block. In addition, building outline polygon data indicating the area is stored for the building outline.

The probe information storing unit 5 stores therein the destination points set by the navigation system in association with the link deviation points corresponding to the respective destination points. For example, in FIG. 2A, link deviation points P11 to P15 are associated with the destination point D1. As above, multiple link deviation points may be associated with the same destination point. Examples of the destination point include a coordinate of the destination that is set as a target of the route search by a route search unit (not shown) in the navigation system. In setting the above destination, when the destination is set by scrolling the map, the destination point may be set as the coordinate corresponding to the destination. When the destination is set by entering an address, the destination point may be set as a coordinate corresponding to the address. In addition, in a case, where a facility database (described later) is provided to store therein the facility name, the address, the telephone number, the coordinate of the representative point for each facility, the database is referred to and the coordinate of the representative point corresponding to the facility name, the facility address, or the facility telephone number, which are entered during setting the destination, may be stored as the destination point. Also, examples of the link deviation point corresponding to the set destination point include a point on a surrounding road that surrounds the area (e.g., a block), in which the set destination point is located. In the above, through the point, a vehicle, which drives to the destination point as the destination, deviates from the surrounding road and enters the area. The examples of other information in the probe information include a vehicle ID for identifying a probe vehicle, coordinate information, time information, travel trajectory, direction, speed, acceleration, brake, hard brake, direction indicator, steering wheel angle, headlamp, and wiper.

The destination point group generating unit 7 refers to the probe information storing unit 5 and groups the destination points located adjacent to each other to generate a destination point group. The method for generating the destination point group is not limited to any particular method. The destination points may be grouped, for example, based on an index, such as a distance between destination points, a block polygon, and a building outline polygon. In a case, where the distance between the destination points is used as the index, for example, when there are a predetermined number (e.g., two or more) of the destination points located within a predetermined range (e.g., within an area defined by 100 m radius), the above multiple destination points located within the predetermined range may be grouped as the destination point group. For example, in FIG. 2B, destination points D1 to D3 located within a range a of 100 m radius may be grouped. In other case, where the block polygon is used as the index, the destination points located within the same block polygon may be grouped based on the block polygon data stored in the map database 3, for example. When the grouping is based on the block polygon, the destination points D1 to D4 located within the same block may be grouped as the destination point group in FIG. 2B. In another case, where the building outline polygon is used as the index, for example, the destination points located within the same building outline polygon may be grouped based on the building outline polygon data stored in the map database 3.

The target area setting unit 9 sets a target area based on the destination point group generated by the destination point group generating unit 7. The method for setting the target area is not limited to any particular method. For example, the target area may correspond to the index used for generating the destination point group, such as the block polygon, the building outline polygon, and the range defined by the distance between destination points. In another example, the coordinates of all of the destination points included in the generated destination point group are used and a range of a minimum circle that includes all of the above destination points may be set as the target area. For example, in FIG. 3A, the range indicated by symbol A may be specified as the target area.

The target link deviation point specifying unit 11 refers to the probe information storing unit 5 and specifies, as target link deviation points, link deviation points associated with the above destination points included in the destination point group generated by the destination point group generating unit 7. For example, in FIG. 3A, the target link deviation point specifying unit 11 may specify link deviation points P11 to P15, which are associated with a destination point D1, as the target link deviation points. The target link deviation point specifying unit 11 may specify link deviation points P21 to P26, which are associated with a destination point D2, as the target link deviation points. Also, the target link deviation point specifying unit 11 may specify link deviation points P31 to P39, which are associated with a destination point D3, as the target link deviation points.

The link deviation point group generating unit 13 groups the target link deviation points, which are specified by the target link deviation point specifying unit 11 and are located adjacent to each other, to generate a link deviation point group. The method for generating the link deviation point group is not limited to any particular method. Alternatively, target link deviation points, which are located on the same link and which has a predetermined distance or less (e.g., 5 m or less) therebetween, may be grouped as the link deviation point group. For example, in FIG. 3A, link deviation point groups indicated by symbols G1 to G4 may be generated.

The reference coordinate setting unit 15 sets a reference coordinate for the link deviation point group generated by the link deviation point group generating unit 13. The method for setting the reference coordinate is not limited to any particular method. The center of an approximate line formed based on the above link deviation point group may be set as the reference coordinate. Alternatively, the center of gravity of an area formed by connecting the outermost ones among the link deviation points within the link deviation point group may be set as the reference coordinate. For example, in FIG. 3B, the reference coordinates indicated by symbols Q1 to Q4 may be set.

The possible arrival point specifying unit 17 specifies the reference coordinate set by the reference coordinate setting unit 15 as a possible arrival point of the above target area. The specified possible arrival point may be stored in a storing unit (not shown) in association with the corresponding target area. The storing unit is referred to when a destination is set in the navigation system. Therefore, the system may first specify the target area, in which the set destination is located, and may guide the vehicle to the possible arrival point associated with the specified target area. When multiple possible arrival points are associated with the target area, the system may provide, as the guidance, a possible arrival point closer to a current location of the vehicle indicated by the navigation system. Alternatively, the system may guide the vehicle to a possible arrival point having a minimum route cost computed based on Dijkstra's algorithm for a route between the possible arrival point and the current location of the vehicle.

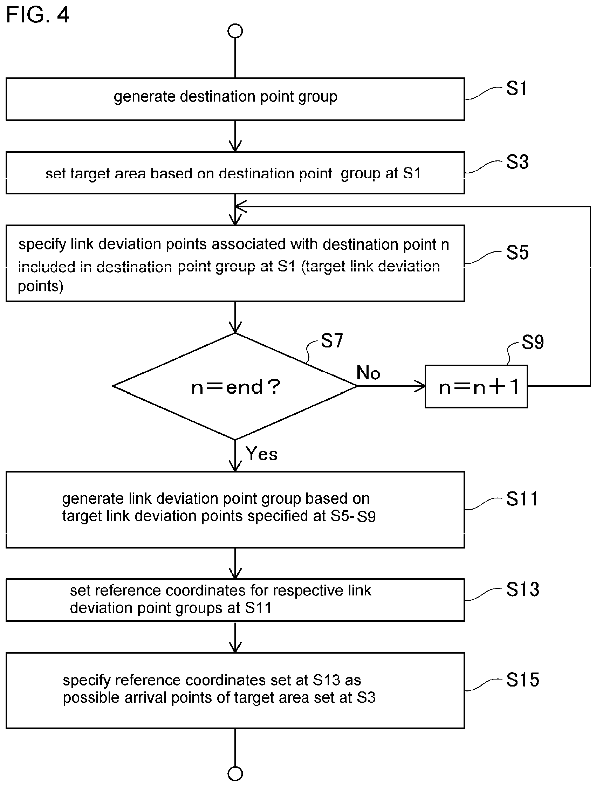

FIG. 4 is a flowchart illustrating one example of a possible arrival point specifying method executed by the possible arrival point specifying system 1 illustrated in FIG. 1.

At step 1, the destination point group generation unit 7 refers to the probe information storing unit 5 and groups the destination points located adjacent to each other to generate a destination point group. In this example, as shown in FIG. 2B, the destination points D1 to D3 located within the range indicated by symbol a are grouped to generate the destination point group. In this example, the diameter of the range indicated by symbol a is 100 m.

At step 3, the target area setting unit 9 sets the target area based on the destination point group generated at step 1. In this example, as shown in FIG. 3A, the range indicated by symbol A is set as the target area. More specifically, the minimum range defined based on the locations of the destination points in the destination point group generated at step 1 is set as the target area.

At step 5, with reference to the probe information storing unit 5, the target link deviation point specifying unit 11 specifies, as the target link deviation points, the link deviation points associated with the destination point n included in the destination point group generated at step 1. Control iterates the processes at steps 5, 7 and 9 so that process at step 5 is executed for all the destination points included in the destination point group generated at step 1. In this example, as shown in FIG. 3A, control specifies the link deviation points P11 to P15, which are associated with the destination point D1, as the target link deviation points and specifies the link deviation points P21 to P26, which are associated with the destination point D2, as the target link deviation points. Also, control specifies the link deviation points P31 to P39, which are associated with the destination point D3, as the target link deviation points.

At step 11, the link deviation point group generating unit 13 uses the target link deviation points, which are specified by the processes at steps 5 to 9, and groups the target link deviation points, which are located adjacent to each other, to generate the link deviation point group. In this example, the link deviation points located within a range of 5 m on the same link are grouped to generate the link deviation point groups G1 to G4.

At step 13, control sets the reference coordinates for the respective link deviation point groups generated at step 11. In this example, as shown in FIG. 3B, the reference coordinates indicated by symbols Q1 to Q4 are set for the link deviation point groups G1 to G4, respectively. In this example, the reference coordinate Q1 is positioned half way between the point P11, which is positioned at one end of the link deviation point group G1, and the point P39, which is positioned at the other end of the link deviation point group G1 that includes the link deviation points P11, P12, P25, P26, and P39.

At step 15, the possible arrival point specifying unit 17 specifies the reference coordinates set at step 13 as the possible arrival points of the target area set at step 3. In this example, as shown in FIG. 3B, the reference coordinates Q1 to Q4 are specified as the possible arrival points for the target area A.

### (Second Embodiment)

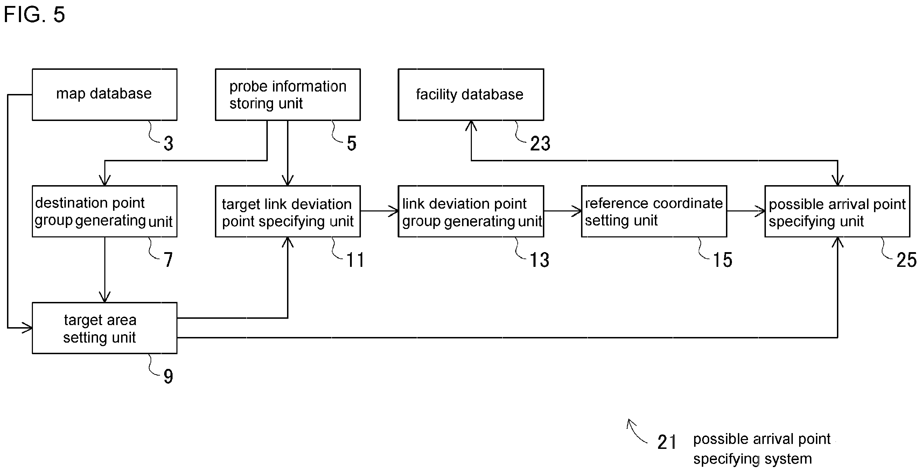

FIG. 5 is a block diagram illustrating a schematic configuration of a possible arrival point specifying system 21 of one embodiment of the present invention.

As shown in FIG. 5, the possible arrival point specifying system 21 of the second embodiment further includes a facility database 23 in addition to each component of the possible arrival point specifying system 1 of the first embodiment, and includes a possible arrival point specifying unit 25 to replace the possible arrival point specifying unit 17. In FIG. 5, components similar to those in FIG. 1 are indicated by the same numerals and the explanation thereof will be partially omitted.

The facility database 23 stores information on facilities therein. Examples of information on the facility include facility name, facility address, facility telephone number, and guidance end point. Each information is stored in association with a coordinate indicating the representative point of the facility, or with a polygon indicating the area of the facility. The above guidance end point corresponds to a point, at which the route guidance is ended, when the facility is set as the destination in the navigation system.

The possible arrival point specifying unit 25 refers to the facility database 23 and specifies the reference coordinate set by the reference coordinate setting unit 15 as the possible arrival point of the facility located within the target area. Examples of a method for specifying the possible arrival point include specifying a facility having a facility address in the target area from the facility database 23, and specifying the above reference coordinate as a possible arrival point for the specified facility. The facility address may be replaced with a coordinate indicating the representative point of the facility, or with the polygon indicating the area of the facility, which are stored in the facility database 23. The specified possible arrival point may be stored in association with the corresponding facility included in the facility database 23. The facility database 23 is referred to when a destination is set in the navigation system. Then, the system may specify a facility that matches the set destination and may provide, as the guidance, the possible arrival point associated with the specified facility instead of the guidance end point for the destination. As another example, similar to the above, the specified possible arrival point may be stored in a storing unit (not shown) in association with the corresponding facility. When the specified facility is associated with multiple possible arrival points within the target area, the possible arrival point specifying unit 25 functions similarly to the possible arrival point specifying unit 17.

### (Third Embodiment)

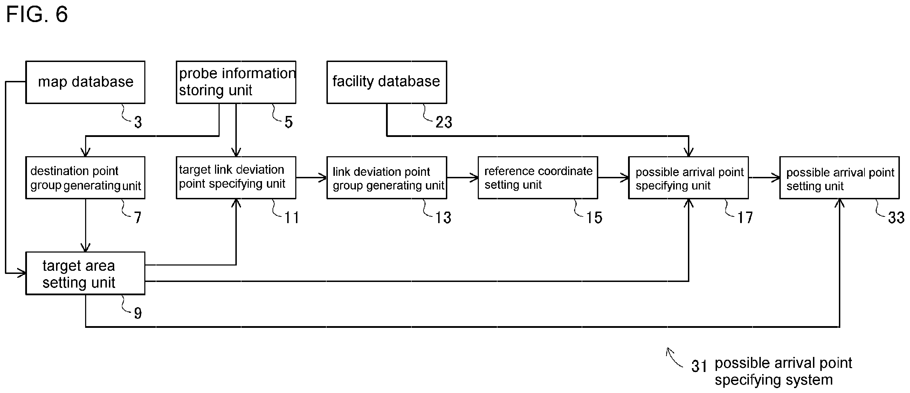

FIG. 6 is a block diagram illustrating a schematic configuration of a possible arrival point specifying system 31 of one embodiment of the present invention.

As shown in FIG. 6, the possible arrival point specifying system 31 of the third embodiment further includes the facility database 23 and a possible arrival point setting unit 33 in addition to each component of the possible arrival point specifying system 1 of the first embodiment. In FIG. 6, components similar to those in FIGS. 1 and 5 are indicated by the same numerals and the explanation thereof will be partially omitted.

The possible arrival point setting unit 33 sets the possible arrival point specified by the possible arrival point specifying unit 17 for other facilities having a predetermined relationship with the target area. The method for setting the possible arrival point is not limited to any particular method. For example, a facility having a facility address located within a predetermined distance from the target area may be specified based on the facility database 23 and the above specified possible arrival point may be set for the specified facility. Examples of a method for specifying the possible arrival point include specifying a facility having a facility address located within the polygon (e.g., the block polygon, the building outline polygon), in which the above target area is located, based on the facility database 23, and setting the above possible arrival point for the specified facility. The facility address may be replaced with a coordinate indicating the representative point of the facility, or with the polygon indicating the area of the facility, which are stored in the facility database 23.

### (Fourth Embodiment)

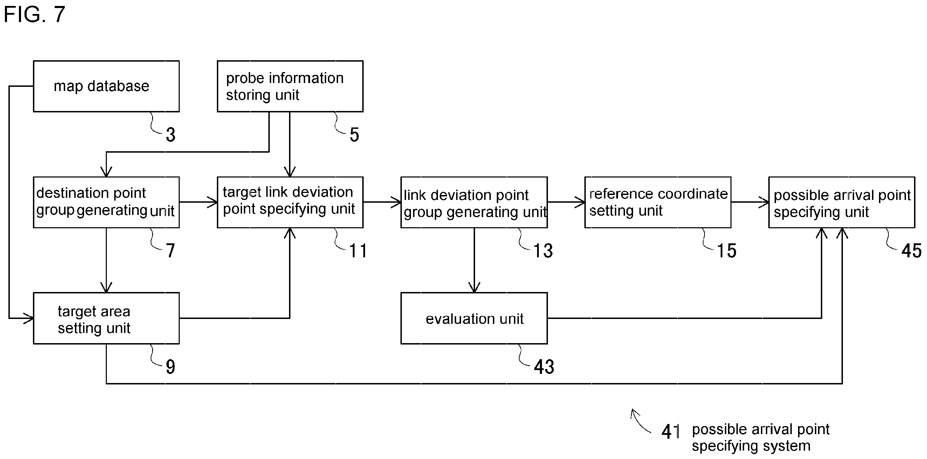

FIG. 7 is a block diagram illustrating a schematic configuration of a possible arrival point specifying system 41 of one embodiment of the present invention.

As shown in FIG. 7, the possible arrival point specifying system 41 of the fourth embodiment further includes an evaluation unit 43 in addition to each component of the possible arrival point specifying system 1 of the first embodiment, and includes a possible arrival point specifying unit 45 to replace the possible arrival point specifying unit 17. In FIG. 7, components similar to those in FIGS. 1, 5 and 6 are indicated by the same numerals and the explanation thereof will be partially omitted.

The evaluation unit 43 evaluates the link deviation point group generated by the link deviation point group generating unit 13. The method for evaluating the link deviation point group is not limited to any particular method. Examples of evaluation include evaluating the link deviation point group based on the number of the link deviation points included in the link deviation point group or based on the distance from the link deviation point group to the destination. In an example of the former case, the link deviation point group having a larger number of link deviation points may be evaluated higher. For example, the link deviation point groups may be ranked in descending order of the number of link deviation points, and may be evaluated with multiple levels (e.g., 5 levels) based on the number of the link deviation points. In an example of the latter case, the link deviation point groups may be ranked higher when a distance from the destination is shorter and may be evaluated with multiple levels.

The possible arrival point specifying unit 45 specifies the above possible arrival point based on the evaluation results by the evaluation unit 43. Examples of the method for specifying the possible arrival point include specifying the reference coordinate as the possible arrival point for the target area in consideration of the evaluation results. In another example, the reference coordinate of the link deviation point group that is evaluated highest among the evaluation results may be specified as the possible arrival point of the target area.

### (First Example Embodiment)

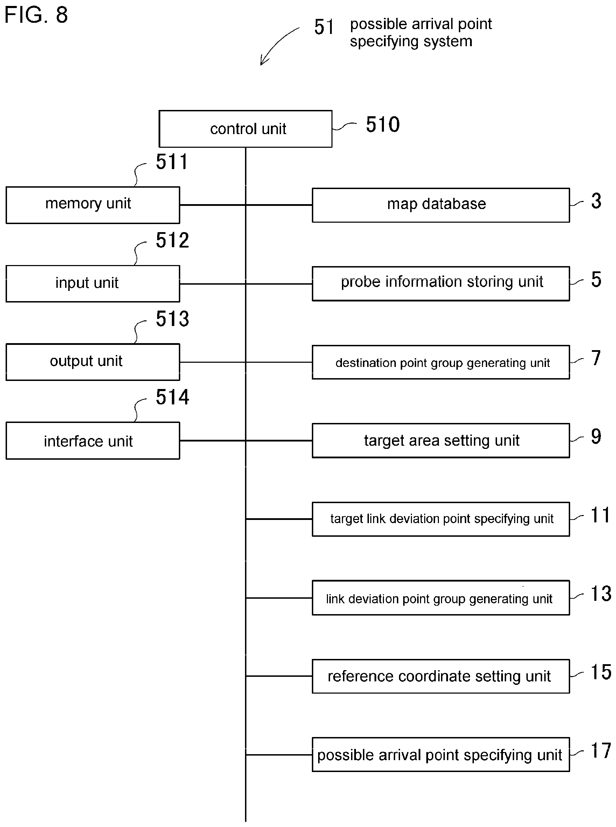

FIG. 8 is a block diagram illustrating a schematic configuration of a possible arrival point specifying system 51 of one example embodiment of the present invention. The possible arrival point specifying system 51 according to the first example embodiment further includes a control unit 510, a memory unit 511, an input unit 512, an output unit 513, and an interface unit 514 in addition to the components that configure the possible arrival point specifying system 1 according to the first embodiment. In FIG. 8, components similar to those in FIGS. 1, 5, 6 and 7 are indicated by the same numerals and the explanation thereof will be partially omitted.

The control unit 510 is a computer device, which includes a buffer memory and other devices, and the control unit 510 controls other components that configure the possible arrival point specifying system 51.

The memory unit 511 stores therein a computer program, and the computer program is read by the control unit 510, which serves as the computer device, so that the control unit 510 functions accordingly. The computer program may be stored in a general medium such as an SD memory card^{™}.

The input unit 512 is used by a user of the possible arrival point specifying system when the user inputs commands, for example. The input unit 512 may be a pointing device (e.g., a mouse, a light pen, a touch sensitive panel that works with content on a display), a keyboard, or an audio input device (e.g., a microphone).

The output unit 513 includes a display. The output unit 513 may display the target area set by the target area setting unit 9, the reference coordinate set by the reference coordinate setting unit 15, the possible arrival point specified by the possible arrival point specifying unit 17, and the like together with a map.

The interface unit 514 connects the possible arrival point specifying system 51 with a wireless network and the like.

In the present specification, expressions such as "comprising", "including", or "having" one component are not exclusive expressions that intend to exclude other components. The above expressions are intended to include components other than the one component.

Although the embodiments and an example embodiment of the present disclosure have been described as above, the present invention is not limited to the description of each aspect of the above disclosure, the description of the embodiments and the example embodiment, and the description of the modifications. The present invention includes variations and modifications, which are made without departing from the scope of the present invention as defined by the appended claims, and are easily made by those skilled in the art. More specifically, the above embodiments and the example embodiment of the present invention may be modified and implemented within the scope of the present invention as defined by the appended claims.

A possible arrival point specifying system, a method for specifying a possible arrival point, and a tangible non-transitory computer-readable storage medium containing computer program are provided.

## Claims

1. A possible arrival point specifying system comprising:
a probe information storing unit (5) configured to store therein destination points set by a navigation system in association with link deviation points corresponding to the respective destination points,
wherein a link deviation point is a point at which a vehicle deviates from a final link in a travel trajectory to a respective set destination point;
a destination point group generating unit (7) configured to refer to the probe information storing unit (5) and to group the destination points located adjacent to each other to generate a destination point group;
a target area setting unit (9) configured to set a target area based on the generated destination point group;
a target link deviation point specifying unit (11) configured to refer to the probe information storing unit (5) and specify, as target link deviation points, link deviation points associated with the destination points included in the generated destination point group;
a link deviation point group generating unit (13) configured to group the specified target link deviation points located adjacent to each other to generate a link deviation point group;
a reference coordinate setting unit (15) configured to set a reference coordinate for the generated link deviation point group; and
a possible arrival point specifying unit (17) configured to specify the set reference coordinate as a possible arrival point of the target area and/or a possible arrival point of a facility or an address located within the target area.

2. The possible arrival point specifying system according to claim 1 comprising:
a possible arrival point setting unit (33) configured to set the specified possible arrival point to another facility having a predetermined relationship with the target area.

3. The possible arrival point specifying system according to claim 2, wherein:
the predetermined relationship is based on a distance, a building outline, or a block.

4. The possible arrival point specifying system according to any one of claims 1 to 3 comprising:
an evaluation unit (43) configured to evaluate the generated link deviation point group, wherein:
the possible arrival point specifying unit (17) specifies the possible arrival point based on an evaluation result by the evaluation unit (43).

5. A method for specifying a possible arrival point comprising the steps of:
storing, in a probe information storing unit (5), destination points set by a navigation system in association with link deviation points corresponding to the respective destination points,
wherein a link deviation point is a point at which a vehicle deviates from a final link in a travel trajectory to a respective set destination point;
referring to the probe information storing unit (5) and grouping the destination points located adjacent to each other to generate a destination point group by using a destination point group generating unit (7);
setting a target area based on the generated destination point group by using a target area setting unit (9);
referring to the probe information storing unit (5) and specifying, as target link deviation points, link deviation points associated with the destination points included in the generated destination point group by using a target link deviation point specifying unit (11);
grouping the specified target link deviation points located adjacent to each other to generate a link deviation point group by using a link deviation point group generating unit (13);
setting a reference coordinate for the generated link deviation point group by using a reference coordinate setting unit (15); and
specifying the set reference coordinate as a possible arrival point of the target area and/or a possible arrival point of a facility or an address located within the target area by using a possible arrival point specifying unit (17).

6. The method according to claim 5 comprising the step of:
setting the specified possible arrival point to another facility having a predetermined relationship with the target area by using a possible arrival point setting unit (33).

7. The method according to claim 6, wherein:
the predetermined relationship is based on a distance, a building outline, or a block.

8. The method according to any one of claims 5 to 7 comprising the step of:
evaluating the generated link deviation point group using an evaluation unit (43), wherein:
the specifying of the possible arrival point includes specifying the possible arrival point based on an evaluation result by the evaluating of the generated link deviation point group.

9. A tangible non-transitory computer-readable storage medium containing a computer program for specifying a possible arrival point, the computer program configured to cause a computer to function as:
probe information storing means for storing therein destination points set by a navigation system in association with link deviation points corresponding to the respective destination points,
wherein a link deviation point is a point at which a vehicle deviates from a final link in a travel trajectory to a respective set destination point;
destination point group generating means for referring to the probe information storing unit and for grouping the destination points located adjacent to each other to generate a destination point group;
target area setting means for setting a target area based on the generated destination point group;
target link deviation point specifying means for referring to the probe information storing means and for specifying, as target link deviation points, link deviation points associated with the destination points included in the generated destination point group;
link deviation point group generating means for grouping the specified target link deviation points located adjacent to each other to generate a link deviation point group;
reference coordinate setting means for setting a reference coordinate for the generated link deviation point group; and
possible arrival point specifying means for specifying the set reference coordinate as a possible arrival point of the target area and/or a possible arrival point of a facility or an address located within the target area.

10. The tangible non-transitory computer-readable storage medium according to claim 9, wherein the computer program is further configured to cause the computer to function as:
possible arrival point setting means for setting the specified possible arrival point to another facility having a predetermined relationship with the target area.

11. The tangible non-transitory computer-readable storage medium according to claim 10, wherein:
the predetermined relationship is based on a distance, a building outline, or a block.

12. The tangible non-transitory computer-readable storage medium according to any one of claims 9 to 11, wherein the computer program is further configured to cause the computer to function as:
evaluation means for evaluating the generated link deviation point group, wherein:
the possible arrival point specifying means specifies the possible arrival point based on an evaluation result by the evaluation means.

## Patentansprüche

1. System zum Spezifizieren eines möglichen Ankunftspunkt, mit:
einer Sondeninformationenspeichereinheit (5), die konfiguriert ist, um darin durch ein Navigationssystem eingestellte Zielpunkte in Verbindung mit Verbindungsabweichungspunkten entsprechend den jeweiligen Zielpunkten zu speichern, wobei ein Verbindungsabweichungspunkt ein Punkt ist, an dem ein Fahrzeug von einer finalen Verbindung in einer Fahrttrajektorie zu einem entsprechenden eingestellten Zielpunkt abweicht;
eine Zielpunktgruppenerzeugungseinheit (7), die konfiguriert ist, um sich auf die Sondeninformationenspeichereinheit (5) zu beziehen, und um die Zielpunkte, die sich benachbart zueinander befinden, zu gruppieren, um eine Zielpunktgruppe zu erzeugen;
einer Zielbereichseinstelleinheit (9), die konfiguriert ist, um einen Zielbereich basierend auf der erzeugten Zielpunktgruppe einzustellen;
einer Zielverbindungsabweichungspunktspezifizierungseinheit (11), die konfiguriert ist, um sich auf die Sondeninformationenspeichereinheit (5) zu beziehen, und um, als die Zielverbindungsabweichungspunkte, Verbindungsabweichungspunkte in Verbindung mit den in der erzeugten Zielpunktgruppe enthaltenen Zielpunkten zu spezifizieren;
einer Verbindungsabweichungspunktgruppenerzeugungseinheit (13), die konfiguriert ist, um die spezifizierten Zielverbindungsabweichungspunkte, die sich benachbart zueinander befinden, zu gruppieren, um eine Verbindungsabweichungspunktgruppe zu erzeugen;
einer Referenzkoordinateneinstelleinheit (15), die konfiguriert ist, um eine Referenzkoordinate für die erzeugte Verbindungsabweichungspunktgruppe einzustellen; und
einer Spezifizierungseinheit eines möglichen Ankunftspunkts (17), die konfiguriert ist, um die eingestellte Referenzkoordinate als einen möglichen Ankunftspunkt des Zielbereichs und/oder einen möglichen Ankunftspunkt einer Einrichtung oder einer Adresse, die sich innerhalb des Zielbereichs befindet, zu spezifizieren.

2. System zum Spezifizieren eines möglichen Ankunftspunkts gemäß Anspruch 1, mit:
einer Einstelleinheit eines möglichen Ankunftspunkts (33), die konfiguriert ist, um den spezifizierten möglichen Ankunftspunkt auf eine andere Einrichtung mit einer vorbestimmten Beziehung mit dem Zielbereich einzustellen.

3. System zum Spezifizieren eines möglichen Ankunftspunkts gemäß Anspruch 2, wobei:
die vorbestimmte Beziehung auf einer Distanz, einem Gebäudeumriss oder einem Block basiert.

4. System zum Spezifizieren eines möglichen Ankunftspunkts gemäß einem der Ansprüche 1 bis 3, mit:
einer Evaluierungseinheit (43), die konfiguriert ist, um die erzeugte Verbindungsabweichungspunktgruppe zu evaluieren, wobei:
die Spezifizierungseinheit eines möglichen Ankunftspunkts (17) den möglichen Ankunftspunkt basierend auf einem Evaluierungsergebnis durch die Evaluierungseinheit (43) spezifiziert.

5. Verfahren zum Spezifizieren eines möglichen Ankunftspunkts, mit den Schritten:
Speichern, in einer Sondeninformationenspeichereinheit (5), von durch ein Navigationssystem eingestellten Zielpunkten in Verbindung mit Verbindungsabweichungspunkten entsprechend den jeweiligen Zielpunkten, wobei ein Verbindungsabweichungspunkt ein Punkt ist, an dem ein Fahrzeug von einer finalen Verbindung in einer Fahrttrajektorie zu einem entsprechend eingestellten Zielpunkt abweicht;
Bezugnehmen auf die Sondeninformationenspeichereinheit (5) und Gruppieren der Zielpunkte, die sich benachbart zueinander befinden, um eine Zielpunktgruppe zu erzeugen, unter Verwendung einer Zielpunktgruppenerzeugungseinheit (7);
Einstellen eines Zielbereichs basierend auf der erzeugten Zielpunktegruppe unter Verwendung einer Zielbereichseinstelleinheit (9);
Bezugnehmen auf die Sondeninformationenspeichereinheit (5) und Spezifizieren, als Zielverbindungsabweichungspunkte, von Verbindungsabweichungspunkten in Verbindung mit den in der erzeugten Zielpunktgruppe enthaltenen Zielpunkten unter Verwendung einer Zielverbindungsabweichungspunktspezifizierungseinheit (11);
Gruppieren der spezifizierten Zielverbindungsabweichungspunkte, die sich benachbart zueinander befinden, um eine Verbindungsabweichungspunktgruppe zu erzeugen, unter Verwendung einer Verbindungsabweichungspunktgruppenerzeugungseinheit (13);
Einstellen einer Referenzkoordinate für die erzeugte Verbindungsabweichungspunktgruppe unter Verwendung einer Referenzkoordinateneinstelleinheit (15); und
Spezifizieren der eingestellten Referenzkoordinate als einen möglichen Ankunftspunkt des Zielbereichs und/oder eines möglichen Ankunftspunkts einer Einrichtung oder einer Adresse, die sich innerhalb des Zielbereichs befindet, unter Verwendung einer Spezifizierungseinheit eines möglichen Ankunftspunkts (17).

6. Verfahren gemäß Anspruch 5, mit dem Schritt:
Einstellen des spezifizierten möglichen Ankunftspunkts auf eine andere Einrichtung mit einer vorbestimmten Beziehung mit dem Zielbereich unter Verwendung einer Einstelleinheit eines möglichen Ankunftspunkts (33).

7. Verfahren gemäß Anspruch 6, wobei:
die vorbestimmte Beziehung auf einer Distanz, einem Gebäudeumriss oder einem Block basiert.

8. Verfahren gemäß einem der Ansprüche 5 bis 7, mit dem Schritt:
Evaluieren der erzeugten Verbindungsabweichungspunktgruppe unter Verwendung einer Evaluierungseinheit (43) wobei:
das Spezifizieren des möglichen Ankunftspunkts ein Spezifizieren des möglichen Ankunftspunkts basierend auf einem Evaluierungsergebnis durch das Evaluieren der erzeugten Verbindungsabweichungspunktgruppe umfasst.

9. Materielles nichttransitorisches computerlesbares Speichermedium, das ein Computerprogramm zum Spezifizieren eines möglichen Ankunftspunkts enthält, wobei das Computerprogramm konfiguriert ist, um einen Computer zu veranlassen, zu fungieren als:
eine Sondeninformationenspeichereinheit zum darin Speichern von durch ein Navigationssystem eingestellten Zielpunkten in Verbindung mit Verbindungsabweichungspunkten entsprechend den jeweiligen Zielpunkten, wobei ein Verbindungsabweichungspunkt ein Punkt ist, an dem ein Fahrzeug von einer finalen Verbindung in einer Fahrttrajektorie zu einem entsprechend eingestellten Zielpunkt abweicht;
eine Zielpunktgruppenerzeugungseinrichtung zum Bezugnehmen auf die Sondeninformationenspeichereinheit und zum Gruppieren der sich benachbart zueinander befindlichen Zielpunkte, um eine Zielpunktgruppe zu erzeugen;
eine Zielbereichseinstelleinrichtung zum Einstellen eines Zielbereichs basierend auf der erzeugten Zielpunktgruppe;
eine Zielverbindungsabweichungspunktspezifizierungseinrichtung zum Bezugnehmen auf die Sondeninformationenspeichereinrichtung und zum Spezifizieren als Zielverbindungsabweichungspunkte, von Abweichungspunkten in Verbindung mit den in der erzeugten Zielpunktgruppe enthaltenen Zielpunkten;
eine Verbindungsabweichungspunktgruppenerzeugungseinrichtung zum Gruppieren der spezifizierten Zielverbindungsabweichungspunkte, die sich benachbart zueinander befinden, um eine Verbindungsabweichungspunktgruppe zu erzeugen;
eine Referenzkoordinateneinstelleinrichtung zum Einstellen einer Referenzkoordinate für die erzeugte Verbindungsabweichungspunktgruppe; und
eine Spezifizierungseinrichtung eines möglichen Ankunftspunkts zum Spezifizieren der eingestellten Referenzkoordinate als einen möglichen Ankunftspunkt des Zielbereichs und/oder eines möglichen Ankunftspunkts einer Einrichtung oder einer Adresse, die sich innerhalb des Zielbereichs befindet.

10. Materielles nichttransitorisches computerlesbares Speichermedium gemäß Anspruch 9, wobei das Computerprogramm weiterhin konfiguriert ist, um den Computer zu veranlassen zu fungieren als:
eine Einstelleinrichtung eines möglichen Ankunftspunkts zum Einstellen des spezifizierten möglichen Ankunftspunkts auf eine andere Einrichtung mit einer vorbestimmten Beziehung mit dem Zielbereich.

11. Materielles nichttransitorisches computerlesbares Speichermedium gemäß Anspruch 10, wobei:
die vorbestimmte Beziehung auf einer Distanz, einem Gebäudeumriss oder einem Block basiert.

12. Materielles nichttransitorisches computerlesbares Speichermedium gemäß einem der Ansprüche 9 bis 11, wobei das Computerprogramm weiterhin konfiguriert ist, um den Computer zu veranlassen zu fungieren als:
eine Evaluierungseinrichtung zum Evaluieren der erzeugten Verbindungsabweichungspunktgruppe, wobei:
die Spezifizierungseinrichtung eines möglichen Ankunftspunkts den möglichen Ankunftspunkt basierend auf einem Evaluierungsergebnis durch die Evaluierungseinrichtung spezifiziert.

## Revendications

1. Système de spécification de point d'arrivée possible comprenant :
une unité de stockage d'informations de sonde (5) configurée pour stocker en son sein des points de destination définis par un système de navigation en association avec des points de déviation de liaison correspondant aux points de destination respectifs, dans lequel un point de déviation de liaison est un point au niveau duquel un véhicule dévie par rapport à une liaison finale dans une trajectoire de circulation jusqu'à un point de destination défini respectif ;
une unité de génération de groupe de points de destination (7) configurée pour se référer à l'unité de stockage d'informations de sonde (5) et pour grouper les points de destination situés de manière adjacente les uns aux autres pour générer un groupe de points de destination ;
une unité de définition de zone cible (9) configurée pour définir une zone cible sur la base du groupe de points de destination généré ;
une unité de spécification de point de déviation de liaison cible (11) configurée pour se référer à l'unité de stockage d'informations de sonde (5) et spécifier, en tant que points de déviation de liaison cible, des points de déviation de liaison associés aux points de destination inclus dans le groupe de points de destination généré ;
une unité de génération de groupe de points de déviation de liaison (13) configurée pour grouper les points de déviation de liaison cibles spécifiés situés de manière adjacente les uns aux autres pour générer un groupe de points de déviation de liaison ;
une unité de définition de coordonnée de référence (15) configurée pour définir une coordonnée de référence pour le groupe de points de déviation de liaison généré ; et
une unité de spécification de point d'arrivée possible (17) configurée pour spécifier la coordonnée de référence définie comme un point d'arrivée possible de la zone cible et/ou un point d'arrivée possible d'un équipement ou une adresse située au sein de la zone cible.

2. Système de spécification de point d'arrivée possible selon la revendication 1 comprenant :
une unité de définition de point d'arrivée possible (33) configurée pour définir le point d'arrivée possible spécifié sur un autre équipement ayant une relation prédéterminée avec la zone cible.

3. Système de spécification de point d'arrivée possible selon la revendication 2, dans lequel :
la relation prédéterminée est basée sur une distance, un contour de bâtiment ou un bloc.

4. Système de spécification de point d'arrivée possible selon l'une quelconque des revendications 1 à 3 comprenant :
une unité d'évaluation (43) configurée pour évaluer le groupe de points de déviation de liaison généré, dans lequel :
l'unité de spécification de point d'arrivée possible (17) spécifie le point d'arrivée possible sur la base d'un résultat d'évaluation par l'unité d'évaluation (43).

5. Procédé pour la spécification d'un point d'arrivée possible comprenant les étapes de :
le stockage, dans une unité de stockage d'informations de sonde (5), de points de destination définis par un système de navigation en association avec des points de déviation de liaison correspondant aux points de destination respectifs, dans lequel un point de déviation de liaison est un point au niveau duquel un véhicule dévie par rapport à une liaison finale dans une trajectoire de circulation jusqu'à un point de destination défini respectif ;
le fait de se référer à l'unité de stockage d'informations de sonde (5) et le groupement des points de destination situés de manière adjacente les uns aux autres pour générer un groupe de points de destination en utilisant une unité de génération de groupe de points de destination (7) ;
la définition d'une zone cible sur la base du groupe de points de destination généré en utilisant une unité de définition de zone cible (9) ;
le fait de se référer à l'unité de stockage d'informations de sonde (5) et la spécification, en tant que points de déviation de liaison cible, de points de déviation de liaison associés aux points de destination inclus dans le groupe de points de destination généré en utilisant une unité de spécification de point de déviation de liaison cible (11) ;
le groupement des points de déviation de liaison cibles spécifiés situés de manière adjacente les uns aux autres pour générer un groupe de points de déviation de liaison en utilisant une unité de génération de groupe de points de déviation de liaison (13) ;
la définition d'une coordonnée de référence pour le groupe de points de déviation de liaison généré en utilisant une unité de définition de coordonnée de référence (15) ; et
la spécification de la coordonnée de référence définie comme un point d'arrivée possible de la zone cible et/ou un point d'arrivée possible d'un équipement ou une adresse située au sein de la zone cible en utilisant une unité de spécification de point d'arrivée possible (17).

6. Procédé selon la revendication 5 comprenant l'étape suivante :
la définition du point d'arrivée possible spécifié sur un autre équipement ayant une relation prédéterminée avec la zone cible en utilisant une unité de définition de point d'arrivée possible (33).

7. Procédé selon la revendication 6, dans lequel :
la relation prédéterminée est basée sur une distance, un contour de bâtiment ou un bloc.

8. Procédé selon l'une quelconque des revendications 5 à 7 comprenant l'étape de :
l'évaluation du groupe de points de déviation de liaison généré à l'aide d'une unité d'évaluation (43), dans lequel :
la spécification du point d'arrivée possible inclut la spécification du point d'arrivée possible sur la base d'un résultat d'évaluation par l'évaluation du groupe de points de déviation de liaison généré.

9. Support de stockage tangible non transitoire lisible par ordinateur contenant un programme d'ordinateur pour la spécification d'un point d'arrivée possible, le programme d'ordinateur étant configuré pour amener un ordinateur à fonctionner comme :
un moyen de stockage d'informations de sonde pour stocker en son sein des points de destination définis par un système de navigation en association avec des points de déviation de liaison correspondant aux points de destination respectifs, dans lequel un point de déviation de liaison est un point au niveau duquel un véhicule dévie par rapport à une liaison finale dans une trajectoire de circulation jusqu'à un point de destination défini respectif ;
un moyen de génération de groupe de points de destination pour se référer à l'unité de stockage d'informations de sonde et pour grouper les points de destination situés de manière adjacente les uns aux autres pour générer un groupe de points de destination ;
un moyen de définition de zone cible pour définir une zone cible sur la base du groupe de points de destination généré ;
un moyen de spécification de point de déviation de liaison cible pour se référer au moyen de stockage d'informations de sonde et pour spécifier, en tant que points de déviation de liaison cible, des points de déviation de liaison associés aux points de destination inclus dans le groupe de points de destination généré ;
un moyen de génération de groupe de points de déviation de liaison pour grouper les points de déviation de liaison cibles spécifiés situés de manière adjacente les uns aux autres pour générer un groupe de points de déviation de liaison ;
un moyen de définition de coordonnée de référence pour définir une coordonnée de référence pour le groupe de points de déviation de liaison généré ; et
un moyen de spécification de point d'arrivée possible pour spécifier la coordonnée de référence définie comme un point d'arrivée possible de la zone cible et/ou un point d'arrivée possible d'un équipement ou une adresse située au sein de la zone cible.

10. Support de stockage tangible non transitoire lisible par ordinateur selon la revendication 9, dans lequel le programme d'ordinateur est en outre configuré pour amener l'ordinateur à fonctionner comme :
un moyen de définition de point d'arrivée possible pour définir le point d'arrivée possible spécifié sur un autre équipement ayant une relation prédéterminée avec la zone cible.

11. Support de stockage tangible non transitoire lisible par ordinateur selon la revendication 10, dans lequel :
la relation prédéterminée est basée sur une distance, un contour de bâtiment ou un bloc.

12. Support de stockage tangible non transitoire lisible par ordinateur selon l'une quelconque des revendications 9 à 11, dans lequel le programme d'ordinateur est en outre configuré pour amener l'ordinateur à fonctionner comme :
un moyen d'évaluation pour évaluer le groupe de points de déviation de liaison généré, dans lequel :
le moyen de spécification de point d'arrivée possible spécifie le point d'arrivée possible sur la base d'un résultat d'évaluation par le moyen d'évaluation.
